# EUROPEAN PATENT APPLICATION

(11) **EP 2 645 561 A2**
(43) Date of publication of application: **02.10.2013**
(21) Application number: 13161117.0
(22) Date of filing: 26.03.2013
(51) Int. Cl.: H02P 6/00, H02P 6/16

(54) **Extended range absolute position sensing**

(30) Priority: 27.03.2012 US 201213431239
(71) Applicant: Hamilton Sundstrand Corporation, Windsor Locks, CT 06096-1010 (US)
(72) Inventor: Gronli, Timothy D., Rockford, IL Illinois 61115 (US); Nelson, Shawn M., Forreston, IL Illinois 61030 (US)
(74) Representative: Bridge, Kerry Ann

(57) **Abstract**

A device for absolute position sensing include a motor, 202, having a motor sensor, 208, configured to provide a signal indicative of an angular position or change in angular position of a rotor of the motor, 202, The device also includes an actuator, 206, having an actuator sensor, 210, disposed at a set-point along a linear range of motion of the actuator, 206, configured to provide a signal indicative of a linear position of the actuator, 206. The device further include a controller, 212, configured to receive the signals from the rotor sensor, 208, and the actuator sensor, 210, and responsively calculate an absolute position of the actuator, 206.

## Description

### BACKGROUND OF THE INVENTION

The present disclosure relates to positioning sensing, and more specifically, to methods and systems for extended range absolute position sensing.

Linear and other types of servomechanisms have long been known for use in machine control arts. Electric servo systems typically include systems which convert the rotary motion of a motor into a linear motion of an actuator, by a predictable relationship. In order to provide motion control, the actuator is connected to a controller which utilizes information on the position of the motor rotor and actuator in order to control the actuator. The motors typically include a position sensor, such as a resolver, Hall Effect sensor, or encoder, which is configured to provide the angular position of the motor rotor to the controller. However, in systems where the motor sensor may make multiple electrical output cycles over the entire stroke, or range of motion, of the actuator, the motor sensor can only provide relative motor angular positions and therefore relative linear position of the actuator, not the absolute position of the actuator.

In order to obtain the absolute position of the actuator output a second sensor is typically provided which is capable of measuring the position of the actuator over the entire range of motion of the actuator. Such position sensors include, but are not limited to, Linear Variable Differential Transformers (LVDT) or potentiometers. Since these position sensors must run the entire length of the actuator, the sensors add weight and volume to the actuator.

Accordingly, what is needed is an extended range absolute position sensing system.

### BRIEF DESCRIPTION OF THE INVENTION

In an embodiment, a device for absolute position sensing includes a motor having a motor sensor configured to provide a signal indicative of the angular position or the change in angular position of a rotor of the motor. The device also includes an actuator having an actuator sensor disposed at a set-point along a linear range of motion of the actuator configured to provide a signal indicative of a single linear position of the actuator. The device further includes a controller configured to receive the signals from the rotor sensor and the actuator sensor and responsively calculate an absolute position of the actuator.

In another embodiment, a method for absolute position sensing includes receiving a rotor position signal from a motor sensor, where the rotor position signal is indicative of a change in angular position of a rotor of a motor. The method also includes receiving a actuator position signal from an actuator sensor, where the actuator position signal is indicative of the linear position of an actuator and where the actuator sensor is disposed upon a portion of a stroke of the actuator. The method further includes calculating an absolute position of an actuator based upon the rotor position signal and the actuator position signal.

In yet another embodiment, a method for absolute position sensing includes receiving a rotor position signal from a motor sensor, where the rotor position signal is indicative of a change in angular position of a rotor of a motor. The method also includes receiving an actuator position signal from an actuator sensor, where the actuator position signal is indicative of a single linear position of an actuator and where the actuator sensor is disposed upon a portion of a stroke of the actuator. The device further includes a controller configured to instruct the motor to rotate such that the actuator position signal changes value and identifies the absolute position of the actuator. Then, the controller calculates the absolute actuator position based upon the relative position information from the rotor position signal.

Additional features and advantages are realized through the techniques of the present disclosure. Other embodiments and aspects of the disclosure are described in detail herein and are considered a part of the claimed disclosure. For a better understanding of the disclosure with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

Figure 1 is a block diagram of a system including a motor and an actuator in accordance with an embodiment of the disclosure;

Figure 2 is a block diagram of a system for sensing the absolute position of an actuator in accordance with an embodiment of the disclosure;

Figure 3 is a flow diagram of a method for sensing the absolute position of an actuator in accordance with an embodiment of the disclosure; and

Figure 4 is a flow diagram of another method for sensing the absolute position of an actuator in accordance with an embodiment of the disclosure.

### DETAILED DESCRIPTION OF THE INVENTION

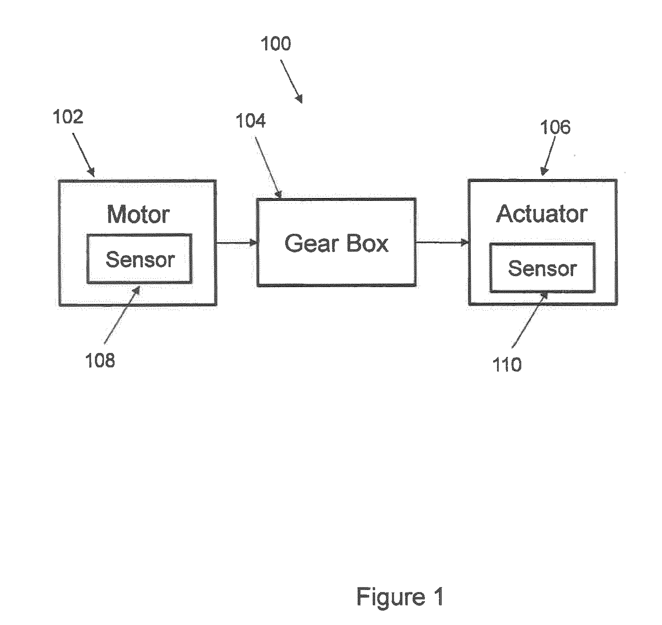

Referring to Figure 1, a block diagram of a system 100 including a motor 102 and an actuator 106 in accordance with an embodiment of the disclosure is shown. As illustrated the system 100 includes a motor 102 that is in operable communication with a gear box 104, which is in operable communication with an actuator 106. In one embodiment, the gear box 104 may include one or more gears that are used to provide speed and torque conversions from the motor 102 to the actuator 106. In one embodiment, the actuator 106 may be a linear actuator that creates motion in a straight line, as contrasted with circular motion of the motor 102. In various embodiments, the actuator 106 may be a mechanical actuator, a hydraulic actuator, a pneumatic actuator, or the like. In general, the actuator 106 has a range of linear positions, which is referred to as the stroke of the actuator 106.

In one embodiment, as a rotor of the motor 102 rotates, the linear position of the actuator 106 is changed. In one example, depending upon the configuration of the motor 102 and the actuator 106, a complete rotation of the rotor in the motor 102 may correlate to a full stroke or less of the actuator 106. In one embodiment, the correlation between the number of rotations of the motor 102 and the linear position of the actuator 106 is also dependent upon the gear box 104. For example, the gear box 104 may include multiple gears which are configured to translate a full rotation of the rotor in the motor 102 to a ten, twenty, or fifty percent of the stroke of the actuator 106.

The motor 102 includes a position sensor 108, such as a resolver, Hall Effect sensor, or encoder, which is configured to provide the angular position or the change in the angular position of the rotor of the motor 102. The actuator 106 includes an actuator sensor 110 that is disposed on a portion of the actuator 106, which provides a signal indicative of whether the linear position of the actuator is in front of or behind the actuator sensor 110. In one embodiment, the actuator sensor 110 is located along the stroke of the actuator 106 at a set-point on the linear position of the actuator 106. The actuator sensor 110 can be configured to produce a binary signal that has a low value if the linear position of the actuator 106 is below the set-point and a high value if the linear position of the actuator 106 is above the set-point. Upon crossing the set-point and transitioning from a low value to a high value, the linear position and rotational position are correlated. Any further changes in rotational position will determine the linear position. In one embodiment, the set-point may be a midpoint of the stroke of the actuator 106 or at any other desired point along the stroke of the actuator 106. For example, if the actuator 106 is configured to operate a flap on an aircraft wing, the set-point may be chosen to correspond with a neutral position of the flap.

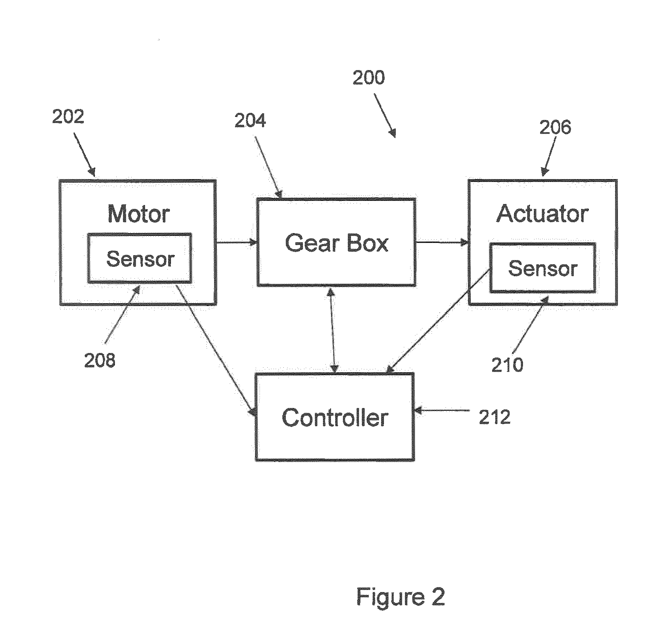

Referring now to Figure 2, a block diagram of a system 200 for sensing the absolute position of an actuator 206 in accordance with an embodiment of the disclosure is shown. As illustrated the system 200 includes a motor 202 having a motor sensor 208 and an actuator sensor 210 which are both in communication with a controller 212. In one embodiment, the controller 212 may include a programmable microcontroller, a general purpose processor, or a simple integrated circuit, such as an application-specific integrated circuit (ASIC) or a field-programmable gate array (FPGA). The controller 212 receives a signal from the motor sensor 208 which is indicative of the angular position or the change in angular position of a rotor of the motor 202. The actuator sensor 210 provides the controller 212 with a signal indicative of whether the linear position of the actuator 206 is in front of or behind, or alternatively above or below, the actuator sensor 210. The controller 212 is configured to accurately determine the absolute position of the actuator based on the signals received from the motor sensor 208 and the actuator sensor 210.

In one embodiment, the controller 212 may also be configured to control the operation of the motor 202 and the gear box 204 to adjust the linear position of the actuator 206. In one embodiment, the controller 212 is configured to ensure that the linear position of the actuator 206 is at a set-point upon system startup or initialization. For example, the controller 212 can use the motor 208 to adjust the position of the actuator 206 until a change in the signal provided by the actuator sensor 210 is detected, which indicates that the actuator is positioned at the set-point. In addition, the controller 212 may be in operable communication with the gear box 204 and is configured to control the gear ratio connecting the motor 202 to the actuator 206. By keeping track of the rotation of the motor 202 and the gear ratio, the controller 212 can accurately determine the absolute position of the actuator 206. By utilizing an actuator sensor 210 to provide feedback over only a portion of the stroke of the actuator 206, the weight and size of the system 200 can be reduced.

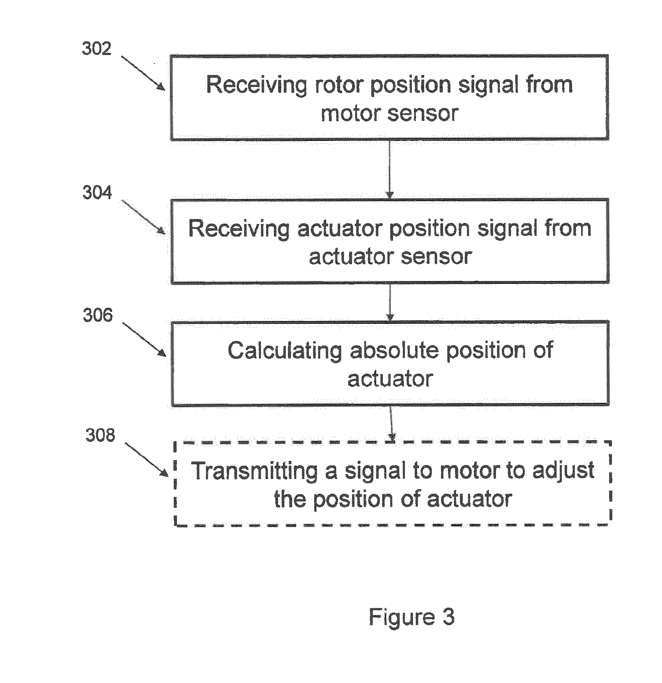

Referring now to Figure 3, a flow diagram of a method for sensing the absolute position of an actuator in accordance with an embodiment of the disclosure is shown. As illustrated at block 302, the method includes receiving a rotor position signal from motor sensor. The method also includes receiving actuator position signal from actuator sensor, as shown at block 304. Next, as shown at block 306, the absolute position of actuator is calculated. In addition, the method may include transmitting a signal to motor to adjust the position of actuator, as shown at block 308.

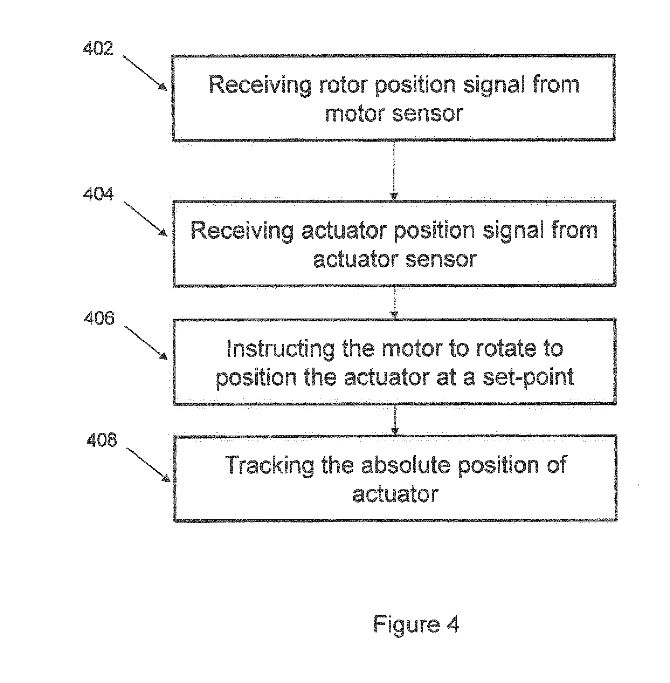

Referring now to Figure 4, a flow diagram of another method for sensing the absolute position of an actuator in accordance with an embodiment of the disclosure is shown. As illustrated at block 402, the method includes receiving rotor position signal from motor sensor. The method also includes receiving actuator position signal from actuator sensor, as shown at block 404. Next, as shown at block 406, the method includes instructing the motor to rotate to position the actuator at a set-point, which is indicated by a change in the actuator position signal. The method also includes tracking an absolute position of an actuator based upon the rotor position signal and the actuator position signal, as shown at block 408.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated

While the preferred embodiment to the disclosure had been described, it will be understood that those skilled in the art, both now and in the future, may make various improvements and enhancements which fall within the scope of the claims which follow. These claims should be construed to maintain the proper protection for the disclosure first described.

## Claims

1. A device for absolute position sensing, comprising:
a motor (202) having a motor sensor (208) configured to provide a signal indicative of an angular position or change in angular position of a rotor of the motor (202);
an actuator (206) having an actuator sensor (210) disposed at a set-point along a linear range of motion of the actuator (206) configured to provide a signal indicative of a linear position of the actuator (206); and
a controller (212) configured to receive the signals from the rotor sensor (208) and the actuator sensor (210) and responsively calculate an absolute position of the actuator (206).

2. The device of claim 1, wherein the signal indicative of the linear position of the actuator is a binary signal that changes state at a single known position.

3. The device of clam 2, wherein the wherein the signal indicative of the linear position of the actuator (206) has a high value if the linear position of the actuator (206) is in front of the set-point and a low value if the linear position of the actuator (206) is in behind of the set-point.

4. The device of claim 1, wherein the set-point is disposed at an approximate midpoint of the linear range of motion of the actuator (206).

5. The device of claim 1, wherein the set-point is disposed at a neutral operational point along the linear range of motion of the actuator (206).

6. A method for absolute position sensing, comprising:
receiving a rotor position signal from a motor sensor (208), wherein the rotor position signal is indicative of an angular position or a change in angular position of a rotor of a motor (202);
receiving an actuator position signal from an actuator sensor (210), wherein the actuator position signal is indicative of a linear position of an actuator (206) and wherein the actuator sensor is disposed upon only a portion of a stroke of the actuator (206); and
calculating an absolute position of an actuator (206) based upon the rotor position signal and the actuator position signal.

7. The method of claim 6, wherein the actuator sensor (210) is disposed at a set-point along the stroke of the actuator (206).

8. The method of claim 7, wherein the actuator position signal is a binary signal.

9. The method of claim 8, wherein the wherein the actuator position signal has a high value if the linear position of the actuator is in front of a set-point and a low value if the linear position of the actuator (206) is in behind of a set-point.

10. A method for absolute position sensing, comprising:
receiving a rotor position signal from a motor sensor (208), wherein the rotor position signal is indicative of an angular position or change in angular position of a rotor of a motor (202);
receiving an actuator position signal from an actuator sensor (210), wherein the actuator position signal is indicative of a linear position of an actuator (206) and wherein the actuator sensor (210) is disposed upon a portion of a stroke of the actuator (206);
instructing the motor to rotate to position the actuator (206) at a set-point, which is indicated by a change in the actuator position signal; and
tracking an absolute position of an actuator (206) based upon the rotor position signal and the actuator position signal.

11. The method of claim 10, wherein the actuator sensor (210) is disposed at the set-point along the stroke of the actuator (206).

12. The method of claim 11, wherein the actuator position signal is a binary signal.

13. The method of claim 12, wherein the wherein the actuator position signal has a high value if the linear position of the actuator is in front of a set-point and a low value if the linear position of the actuator (206) is in behind of a set-point.

14. The method of claim 7 or 10, wherein the set-point is disposed at an approximate midpoint of the linear range of motion of the actuator (206).

15. The method of claim 7 or 10, wherein the set-point is disposed at a neutral operational point along the linear range of motion of the actuator (206).
